(19) Europäisches Patentamt
European Patent Office
Office européen des brevets

(11) EP 2 701 222 A1

(12) **EUROPEAN PATENT APPLICATION**
published in accordance with Art. 153(4) EPC

(43) Date of publication:
**26.02.2014 Bulletin 2014/09**

(21) Application number: **12773744.3**

(22) Date of filing: **11.04.2012**

(51) Int Cl.:
***H01M 4/32*** *(2006.01)* ***H01M 4/52*** *(2010.01)*
***H01M 4/62*** *(2006.01)* ***H01M 10/30*** *(2006.01)*

(86) International application number:
**PCT/JP2012/059931**

(87) International publication number:
**WO 2012/144391 (26.10.2012 Gazette 2012/43)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **18.04.2011 JP 2011091962**
**10.08.2011 JP 2011175267**

(71) Applicant: **Primearth EV Energy Co., Ltd.**
**Shizuoka 431-0422 (JP)**

(72) Inventors:
- **KUDO, So**
  **Kosai-shi**
  **Shizuoka 431-0422 (JP)**
- **MAEHARA, Kenichi**
  **Kosai-shi**
  **Shizuoka 431-0422 (JP)**
- **TAKEDA, Sachio**
  **Kosai-shi**
  **Shizuoka 431-0422 (JP)**
- **OOKAWA, Kazuhiro**
  **Kosai-shi**
  **Shizuoka 431-0422 (JP)**
- **TAKEHARA, Satoru**
  **Kosai-shi**
  **Shizuoka 431-0422 (JP)**
- **SAKAMOTO, Hiroyuki**
  **Kosai-shi**
  **Shizuoka 431-0422 (JP)**

(74) Representative: **Groth & Co. KB**
**P.O. Box 6107**
**102 32 Stockholm (SE)**

(54) **ALKALINE STORAGE BATTERY CATHODE, METHOD FOR PRODUCING ALKALINE STORAGE BATTERY CATHODE, ALKALINE STORAGE BATTERY, METHOD FOR PRODUCING ALKALINE STORAGE BATTERY, CATHODE ACTIVE MATERIAL FOR ALKALINE STORAGE BATTERY, METHOD FOR PRODUCING CATHODE ACTIVE MATERIAL FOR ALKALINE STORAGE BATTERY**

(57) This alkaline storage battery cathode is provided with: nickel hydroxide particles covered by a cobalt-compound coating layer; a zinc compound; and an yttrium compound and/or an ytterbium compound. The zinc compound and the yttrium compound and/or ytterbium compound are blended at a blend ratio that is in accordance with the ratio of the capacity characteristics of the alkaline storage battery and the output characteristics of the alkaline storage battery.

**Fig.1**

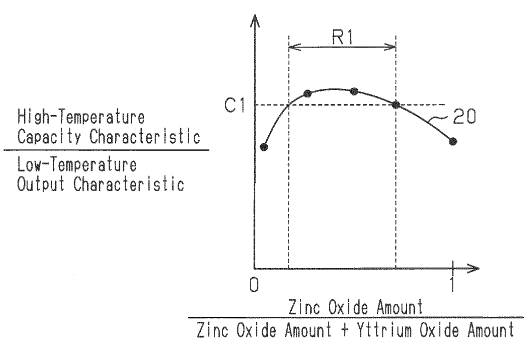


EP 2 701 222 A1

## Description

The present invention relates to a cathode used in an alkaline storage battery.

Among alkaline storage batteries (rechargeable batteries), nickel-metal hydride batteries (NiMH) have a comparatively high energy density and excellent reliability and are thus proposed for adoption as power supplies for portable electronic equipment, electric vehicles, hybrid electric vehicles and the like. A nickel-metal hydride battery includes a cathode containing nickel hydroxide as a main component, an anode containing a hydrogen absorbing alloy as a main component, and an alkaline electrolyte containing potassium hydroxide or the like.

Conventionally known is a nickel-metal hydride battery cathode with which pores of a foamed nickel porous substrate (foamed nickel substrate) are directly filled with a paste containing nickel hydroxide as an active material. An example of a nickel-metal hydride battery including a cathode prepared using an active-material-containing paste is described in Patent Document 1.

In the nickel-metal hydride battery described in Patent Document 1, an electrode group, arranged by laminating cathodes and anodes via separators, is housed inside an outer can also serving as an anode terminal. Each anode of this storage battery includes an active material layer formed on a conductive core body that serves as an active material support. The cathode of the storage battery includes a metal porous body of foamed nickel (for example, with a porosity of 95% and an average pore diameter of 200$\mu$m) and the like, filled with a paste (cathode active material slurry) prepared from a cathode mixture having zinc oxide and yttrium oxide mixed as additives with a nickel hydroxide active material.

In the alkaline storage battery described in Patent Document 2, nickel hydroxide particles coated with a cobalt-compound coating layer is used as a cathode active material. The specific surface area of the cathode active material is no less than 8.0$m^2$/g and no more than 1.8$\times$10$m^2$/g. The specific surface area is determined to suppress polarization of the alkaline storage battery to improve the utilization rate of the cathode active material and suppress a decrease of the electrolyte to improve cycle life characteristics.

Patent Document 1: Japanese Laid-Open Patent Publication No. 2003-317796
Patent Document 2: Japanese Laid-Open Patent Publication No. 2006-48954

The characteristics of a cathode, that is, the characteristics of the paste containing the active material change in accordance with the types and amounts of additives added to the paste. In general, the types and amounts of the additives are adjusted so that the cathode has satisfactory characteristics. However, the characteristics of the cathode change in accordance with the operating conditions and operating environment of the cathode. It was thus difficult to evaluate whether or not the cathode has satisfactory characteristics regardless of the operating conditions and operating environment of the cathode.

Recently, suppression or reduction of the usage amount of yttrium, which is a rare earth element that is frequently used as a cathode additive, is being considered for the purpose of cost reduction and the like.

Also, recently, the operating environments of electric vehicles and hybrid electric vehicles are spreading to environments of higher load, for example, as in use in regions of severe heat, continuous use over long periods of time and the like. In such operating environments as regions of severe heat, continuous use over long periods of time and the like, an increase of battery internal pressure due to generation of oxygen gas from the cathode may quicken with the alkaline storage battery described in Patent Document 2.

An object of the present invention is to provide an alkaline storage battery with which a portion or all of the issues of the conventional art are resolved.

To resolve the above issues, an alkaline storage battery cathode according to a first aspect of the present invention includes nickel hydroxide particles coated with a cobalt-compound coating layer, a zinc compound, and at least one of an yttrium compound and an ytterbium compound, and the zinc compound and the at least one of the yttrium compound and the ytterbium compound are mixed at a mixing ratio that is in accordance with a ratio of a capacity characteristic of an alkaline storage battery and an output characteristic of the alkaline storage battery.

A method of manufacturing an alkaline storage battery cathode according to a second aspect of the present invention includes a step of coating nickel hydroxide particles with a cobalt-compound coating layer and a step of making the nickel hydroxide particles, a zinc compound, and at least one of an yttrium compound and an ytterbium compound be contained in the cathode, and the zinc compound and the at least one of the yttrium compound and the ytterbium compound are mixed at a mixing ratio that is in accordance with a ratio of a capacity characteristic of an alkaline storage battery and an output characteristic of the alkaline storage battery.

An alkaline storage battery according to a third aspect of the present invention includes a cathode including nickel hydroxide particles coated with a cobalt-compound coating layer, a zinc compound, and at least one of an yttrium compound and an ytterbium compound, and the zinc compound and the at least one of the yttrium compound and the ytterbium compound are mixed at a mixing ratio that is in accordance with a ratio of a capacity characteristic of the alkaline storage battery and an output characteristic of the alkaline storage battery.

A method of manufacturing an alkaline storage battery according to a fourth aspect of the present invention includes a step of manufacturing a cathode, the step of manufacturing the cathode includes a step of coating nickel hydroxide particles with a cobalt-compound coating layer and a step of making the nickel hydroxide particles, a zinc compound, and at least one of an yttrium compound and an ytterbium compound be contained in the cathode, and the zinc compound and the at least one of the yttrium compound and the ytterbium compound are mixed at a mixing ratio that is in accordance with a ratio of a capacity characteristic of the alkaline storage battery and an output characteristic of the alkaline storage battery.

Preferably, the nickel hydroxide particles include magnesium/nickel hydroxide solid solution particles.

Preferably, the cobalt-compound coating layer is made of cobalt oxyhydroxide having $\beta$-type crystal structure.

Preferably, the capacity characteristic of the alkaline storage battery is the discharge capacity of the alkaline storage battery at 60 degrees Celsius and the output characteristic of the alkaline storage battery is the DC internal resistance of the alkaline storage battery at -30 degrees Celsius.

Preferably, a ratio of the weight of zinc in the zinc compound powder to total of the weight of the zinc in the zinc compound powder and the weight of yttrium in the yttrium compound powder is no less than 0.35 and no more than 0.85.

An example of the alkaline storage battery cathode includes a porous substrate and a dry mixture, filling the pores of the porous substrate and being the dry mixture containing the nickel hydroxide particles, the zinc compound, and the at least one of the yttrium compound and the ytterbium compound.

An alkaline storage battery cathode active material according to a fifth aspect of the present invention includes nickel hydroxide particles coated with a cobalt-compound coating layer and an increase amount of specific surface area of the nickel hydroxide particles coated with the cobalt-compound coating layer with respect to the specific surface area of the nickel hydroxide particles before coating with the cobalt-compound coating layer is no less than $3m^2/g$.

A method of manufacturing an alkaline storage battery cathode active material according to a sixth aspect of the present invention includes a step of coating nickel hydroxide particles with a cobalt-compound coating layer and the coating step includes increasing the specific surface area of the nickel hydroxide particles coated with the cobalt-compound coating layer by no less than $3m^2/g$ with respect to the specific surface area of the nickel hydroxide particles before coating with the cobalt-compound coating layer.

An alkaline storage battery cathode according to a seventh aspect of the present invention includes a porous substrate and a dry mixture, filling the pores of the porous substrate and being the dry mixture containing a cathode active material, a zinc compound, and at least one of an yttrium compound and an ytterbium compound, the zinc compound and the at least one of the yttrium compound and the ytterbium compound have a mixing ratio that is in accordance with a ratio of a capacity characteristic of an alkaline storage battery and an output characteristic of the alkaline storage battery, the cathode active material is coated nickel hydroxide particles each made of a nickel hydroxide core and a cobalt-compound coating layer coating the nickel hydroxide core, and the coated nickel hydroxide particles have a specific surface area that is increased by no less than $3m^2/g$ with respect to the specific surface area of the nickel hydroxide core.

In one example, the increase amount of specific surface area is no more than $12m^2/g$.

In one example, when an average particle diameter of the nickel hydroxide particles is $A\mu m$ and a proportion of the mass of cobalt contained in the cobalt-compound coating layer with respect to the mass of the nickel hydroxide particles is B%, B/A is no less than $0.37\%/\mu m$ and no more than $1.12\%/\mu m$.

In one example, the B/A is no less than $0.48\%/\mu m$.

The present invention can adjust the usage amount of yttrium and the like used in the cathode of an alkaline storage battery while maintaining the performance of the storage battery. The present invention provides a storage battery having low environmental dependence and excellent battery characteristics.

Fig. 1 is a graph illustrating a relationship of high-temperature capacity characteristic/low-temperature output characteristic and mixing ratio of zinc oxide and yttrium oxide of an alkaline storage battery according to a first embodiment.

Fig. 2 is a graph illustrating a relationship of the mixing ratio of zinc oxide and yttrium oxide and 60°C capacity characteristic/-30°C internal resistance characteristic.

Fig. 3 is a graph illustrating a relationship of mixing ratio of zinc and yttrium and the 60°C capacity characteristic/-30°C internal resistance characteristic.

Fig. 4 is a graph illustrating respective relationships of increase amount of specific surface area of a cathode active material with respect to durability internal pressure and paste viscosity for an alkaline storage battery according to a second embodiment.

Fig. 5 is a graph illustrating a relationship of cobalt coating amount/average particle diameter and 25°C utilization rate.

An alkaline storage battery that includes an alkaline storage battery cathode according to a first embodiment of the present invention will be described.

The alkaline storage battery is, for example, a nickel-metal hydride battery. A sealed type nickel-metal hydride battery that is used as a power supply for an electric vehicle or a hybrid electric vehicle is arranged, for example, by connecting an electrode group, formed by laminating 13 anode plates that contain a hydrogen absorbing alloy and 12 cathode plates that contain nickel hydroxide ($Ni(OH)_2$) via separators arranged from a non-woven fabric of an alkali-resistant resin, to a current collector and housing the electrodes, together with an electrolyte, inside a battery case made of resin.

Manufacture of the nickel-metal hydride battery will be described.

[Preparation of Nickel Hydroxide Particles]

In the first embodiment, the nickel hydroxide contained in the cathode plates are particles. The nickel hydroxide particles are preferably nickel hydroxide particles that contain magnesium in a solid solution state (also referred to as "magnesium/nickel hydroxide solid solution particles"). Magnesium/nickel hydroxide solid solution particles were prepared as follows.

A liquid mixture containing nickel sulfate and magnesium sulfate, a sodium hydroxide aqueous solution, and an ammonia aqueous solution were prepared and these were supplied into a reaction tank to prepare particles. The particles were 10μm in average particle diameter. The proportion of magnesium with respect to all metal elements (nickel and magnesium) in the particles was 3 mol%. The average particle diameter of the nickel hydroxide powder was measured by a laser diffraction/scattering type particle size distribution measuring apparatus.

The CuKα X-ray diffraction pattern of the particles matched the XRD pattern described in JCPDS inorganic material file No. 14-117. It was thus confirmed that the particles have a β-$Ni(OH)_2$ type monolayer structure and that a solid solution in which magnesium is solved in nickel hydroxide is formed.

[Preparation of Cathode Active Material]

Thereafter, a coating layer (also referred to hereinafter as the "cobalt compound layer") of cobalt oxyhydroxide having β-type crystal structure is formed as a cobalt-compound coating layer on surfaces of the nickel hydroxide particles (magnesium/nickel hydroxide solid solution particles) obtained as described above. A cathode active material arranged from the nickel hydroxide particles coated with the coating layer of the cobalt compound was thereby prepared. Specifically, a sodium hydroxide solution was supplied to an aqueous dispersion, placed in a reaction tank and containing the magnesium/nickel hydroxide solid solution particles, and then a cobalt sulfate aqueous solution was supplied and air was supplied into the reaction tank to form the coating layer of cobalt oxyhydroxide having β-type crystal structure on the surfaces of the magnesium/nickel hydroxide solid solution particles.

The proportion of mass of the cobalt contained in the cobalt-compound coating layer coating the nickel hydroxide particles, that is, the cobalt coating amount was adjusted to 5.0 parts by mass on the basis of 100 parts by mass (mass including the solid solution when the solid solution is included) of the nickel hydroxide particles before formation of the cobalt-compound coating layer. That is, the coating amount of the cobalt compound is 5.0% with respect to the mass of the magnesium/nickel hydroxide solid solution particles. Also, the average valence of the cobalt was 2.9. The proportion of mass of cobalt (cobalt coating amount) contained in the cobalt-compound coating layer/average particle diameter μm is 0.5%/μm (=5.0%/10μm). The cobalt coating amount of the nickel hydroxide particles coated with the cobalt-compound coating layer can be quantified by ICP analysis.

Thereafter, a CuKα X-ray diffraction measurement was performed to determine the crystal structure of the cobalt compound layer. Consequently, the cobalt compound layer was confirmed to have the hexagonal-rhombohedral layer structure described in JCPDS inorganic substance file No. 7-169 and to be made of cobalt oxyhydroxide of high crystallinity.

[Manufacture of Nickel Cathode]

Thereafter, a nickel cathode forming the cathode plate was prepared. Specifically, predetermined amounts of an yttrium oxide ($Y_2O_3$) powder and a zinc oxide (ZnO) powder were mixed with 100 parts by weight of the cathode active material powder obtained as described above, predetermined amounts of metal cobalt and water were added to the mixture, and kneading was performed to prepare a paste.

In the first embodiment, the predetermined amount of the yttrium oxide ($Y_2O_3$) powder is 2 parts by weight and the predetermined amount of the zinc oxide (ZnO) powder is 1 part by weight. The predetermined amounts, specifically, the amount (weight) of yttrium oxide and the amount (weight) of zinc oxide may be determined based on the graph of Fig. 1 which is used as a guideline for evaluating a characteristic of the alkaline storage battery cathode. The abscissa of Fig. 1 corresponds to a mixing ratio of the amount (weight) of yttrium oxide and the amount (weight) of zinc oxide and, for example, indicates the (amount of zinc oxide)/(amount of zinc oxide + amount of yttrium oxide). A characteristic curve graph 20 indicates a characteristic of the nickel-metal hydride battery that is in accordance with the mixing ratio and specifically indicates (high-temperature capacity characteristic of the nickel-metal hydride battery)/(low-temperature output characteristic of the nickel-metal hydride battery). A specified value C1 on the ordinate is defined in accordance with the characteristic required of the nickel-metal hydride battery. That is, the mixing ratio at which the performance required of the nickel cathode (cathode plate) can be exhibited is determined from a mixing ratio range R1 corresponding to values at which the (high-temperature capacity characteristic of the nickel-metal hydride battery)/(low-temperature output characteristic of the nickel-metal hydride battery) exceeds the specified value C1. When expressed by the formula of (amount of zinc oxide)/(amount of zinc oxide + amount of yttrium oxide), the mixing ratio in the cathode plate of the first embodiment in which 2 parts by weight of yttrium oxide is mixed with 1 part by weight of zinc oxide is 1/3 (approximately 0.33).

The paste prepared as described above was coated onto a foamed nickel substrate (porous substrate) to fill the pores and dried and pressure forming was performed to prepare a nickel cathode plate. The nickel cathode plate was cut to a predetermined size and it was thereby possible to obtain a nickel cathode, that is, a cathode plate with a theoretical capacity of 650mAh. The theoretical capacity of the nickel electrode (cathode plate) is calculated by assuming that the nickel in the active material undergoes a single-electron reaction.

With the cathode plate of the first embodiment, 2 parts by weight of the yttrium oxide ($Y_2O_3$) powder and 1 part by weight of the zinc oxide (ZnO) powder are added as additives to 100 parts by weight of the cathode active material powder. The weight ratio of yttrium oxide ($Y_2O_3$) and zinc oxide (ZnO) is thus 2:1. A person skilled in the art can select an appropriate ratio from the mixing ratio range R1 determined from the characteristic curve 20 of (high-temperature capacity characteristic of the nickel-metal hydride battery)/(low-temperature output characteristic of the nickel-metal hydride battery) and the specified value C1.

[Manufacture of Alkaline Storage Battery]

Thereafter, an anode containing a hydrogen absorbing alloy was prepared by a known method. Specifically, it was possible to obtain an anode plate with a greater capacity than the cathode by coating a predetermined amount of the hydrogen absorbing alloy, adjusted to be of a predetermined particle diameter, on an electrode support.

Thereafter, 13 of the anode plates and 12 of the cathode plates were laminated via separators arranged from a non-woven fabric of an alkali-resistant resin, connected to a current collector, and housed, together with an electrolyte containing potassium hydroxide (KOH) as a main component, inside a battery case made of resin to manufacture a rectangular, sealed nickel-metal hydride battery.

Measurements of the high-temperature capacity characteristic and the low-temperature output characteristic of the nickel-metal hydride battery prepared in the first embodiment will be described in detail.

The high-temperature capacity characteristic of the nickel-metal hydride battery illustrated in Fig. 1 corresponds to the discharge capacity [Ah] of the nickel-metal hydride battery at 60°C, and the low-temperature output characteristic of the nickel-metal hydride battery corresponds to the DC internal resistance (DC-IR) [mΩ] of the nickel-metal hydride battery at -30°C.

That is, as illustrated in Fig. 2, the high-temperature capacity characteristic/low-temperature output characteristic is expressed as the (discharge capacity of the nickel-metal hydride battery at 60°C)/(DC internal resistance of the nickel-metal hydride battery at -30°C) [Ah/mΩ]. 60°C and -30°C were set on the basis of a typical operating temperature range of an electric vehicle or hybrid electric vehicle. In the present description, the discharge capacity of the nickel-metal hydride battery at 60°C may be abbreviated as "60°C capacity" and the DC internal resistance of the nickel-metal hydride battery at -30°C may be abbreviated as "-30°C DC-IR."

[Measurement of 60°C Capacity]

The "60°C capacity" is the discharge capacity (units are Ah) obtained, under an environmental temperature of 60°C, by charging a storage battery (nickel-metal hydride battery) to an amount corresponding to a predetermined charging capacity (7.0Ah (SOC=100%)) and thereafter discharging from the storage battery at a discharge current of one-tenth of the charging current. This discharge capacity is indicated by a product of the measured discharge current and the measured time from the start of discharge to the final discharge voltage (1V). Generally, a storage battery is judged to be better when its discharge capacity is greater. The SOC (state of charge) corresponds to the residual capacity of the storage battery and specifically indicates a proportion obtained by subtracting the electrical quantity discharged from a completely charged storage battery.

[Measurement of -30°C DC-IR]

The "-30°C DC-IR" is calculated from a relationship of an applied current and a measured voltage in a charging/discharging process in which, after a storage battery (nickel-metal hydride battery) is charged by an amount corresponding to a predetermined charging capacity (SOC 60%), short-time discharging and charging of the storage battery are repeated under an environmental temperature of -30°C. Generally, a storage battery is judged to be better when its internal resistance (IR) is lower.

With the first embodiment, the DC internal resistance (DC-IR) of the nickel-metal hydride battery at -30°C is measured as follows. To be specific, the storage battery is charged under an ordinary temperature until a storage amount (SOC) is 60%. The storage battery is then cooled to - 30°C and discharging at 3.5A, pause, charging at 3.5A, pause, discharging at 7A, pause, charging at 7A, discharging at 10.5A, pause, charging at 10.5A, pause, discharging at 14A, pause, and charging at 14A are performed in that order. The length of each pause is 1 minute and the length of each discharging and each charging is 5 seconds. The voltage at the point of elapse of 4.9 seconds from the start of discharging or charging is measured and the measured voltages corresponding to the respective discharging or charging current values are plotted to prepare a charging current-voltage characteristic curve. The DC internal resistance (DC-IR) of the storage battery is calculated based on the slope of the characteristic curve.

[Selection of the Mixing Ratio of Yttrium Oxide and Zinc Oxide]

In general, the performance of a nickel-metal hydride battery is higher when the value of the high-temperature capacity characteristic is higher and is higher when the low-temperature output characteristic is lower, and therefore, a higher value of the high-temperature capacity characteristic/low-temperature output characteristic indicates that the performance of the storage battery is higher. The capacity of the storage battery tends to decrease under high temperature. On the other hand, the output of the storage battery tends to decrease under low temperature. Therefore, with the first embodiment, performance evaluation of the storage battery under an environmental temperature range from a high-temperature environment to a low-temperature environment is made possible by using the high-temperature capacity characteristic/low-temperature output characteristic as an index for evaluating the performance of the storage battery. Specifically, the storage battery can be evaluated to be higher in performance in an environmental temperature range from a high-temperature environment to a low-temperature environment when its high-temperature capacity characteristic/low-temperature output characteristic is higher.

Fig. 2 shows a relationship of the high-temperature capacity characteristic/low-temperature output characteristic of the storage battery and the mixing ratio of yttrium oxide and zinc oxide (hereinafter referred to simply as "mixing ratio") calculated by zinc oxide/(zinc oxide + yttrium oxide). That is, Fig. 2 shows the high-temperature capacity characteristic/low-temperature output characteristic of the storage battery when the mixing ratio is "1," "2/3," "1/2," "1/3," "1/4," and "1/10." For example, the high-temperature capacity characteristic/low-temperature output characteristic is approximately 0.161 when the mixing ratio is "1," is approximately 0.270 when the mixing ratio is "2/3," is approximately 0.275 when the mixing ratio is "1/2," is approximately 0.283 when the mixing ratio is "1/3," is approximately 0.267 when the mixing ratio is "1/4," and is approximately 0.215 when the mixing ratio is "1/10." The cathode plate for which the mixing ratio is "1" contains only zinc oxide and does not contain yttrium oxide. With the cathode plate for which the mixing ratio is "2/3," the weight ratio of zinc oxide and yttrium oxide is 2:1, that is, the proportion of yttrium oxide is 1/3. With the cathode plate for which the mixing ratio is "1/2," the weight ratio of zinc oxide and yttrium oxide is 1:1, that is, the proportion of yttrium oxide is 1/2. With the cathode plate for which the mixing ratio is "1/3," the weight ratio of zinc oxide and yttrium oxide is 1:2, that is, the proportion of yttrium oxide is 2/3. With the cathode plate for which the mixing ratio is "1/4," the weight ratio of zinc oxide and yttrium oxide is 1:3, that is, the proportion of yttrium oxide is 3/4. With the cathode plate for which the mixing ratio is "1/10," the weight ratio of zinc oxide and yttrium oxide is 1:9, that is, the proportion of yttrium oxide is 9/10.

The abscissa of Fig. 2 indicates the mixing ratio of the oxides. Meanwhile, the abscissa of Fig. 3 indicates the mixing ratio (may be referred to at times as the "elemental mixing ratio") indicated by Zn/(Zn+Y) with the weights of the oxides being converted to weights of the elements. As illustrated in Fig. 3, the mixing ratio is "1" when the high-temperature capacity characteristic/low-temperature output characteristic is approximately 0.161, the mixing ratio is approximately "0.8" when the high-temperature capacity characteristic/low-temperature output characteristic is approximately 0.270, the mixing ratio is approximately "0.66" when the high-temperature capacity characteristic/low-temperature output characteristic is approximately 0.275, the mixing ratio is approximately "0.5" when the high-temperature capacity characteristic/low-temperature output characteristic is approximately 0.283, the mixing ratio is approximately "0.4" when the high-temperature capacity characteristic/low-temperature output characteristic is approximately 0.267, and the mixing ratio is approximately "0.18" when the high-temperature capacity characteristic/low-temperature output characteristic is approximately 0.215. The cathode plate for which the mixing ratio is "1" contains only zinc and does not contain yttrium, with the cathode plate for which the mixing ratio is approximately "0.8," the weight ratio of zinc and yttrium is 4:1, that is, the proportion of yttrium is 1/5, with the cathode plate for which the mixing ratio is approximately "0.66," the weight ratio of zinc and yttrium is 2:1, that is, the proportion of yttrium is 1/3, with the cathode plate for which the mixing ratio is approximately "0.5," the weight ratio of zinc and yttrium is 1:1, that is, the proportion of yttrium is 1/2, with the cathode plate for which the mixing ratio is approximately "0.4," the weight ratio of zinc and yttrium is 2:3, that is, the proportion of yttrium is 3/5, and with the cathode plate for which the mixing ratio is approximately "0.18," the weight ratio of zinc oxide and yttrium oxide is 2:9, that is, the proportion of yttrium oxide is 9/11.

The proportion of yttrium with respect to zinc that corresponds to the desired high-temperature capacity characteristic/low-temperature output characteristic can thus be made known when manufacturing the cathode plate. Conversely, the high-temperature capacity characteristic/low-temperature output characteristic of a storage battery using the cathode plate can be made known from the proportion of yttrium with respect to zinc.

The actions of the first embodiment will be described.

A characteristic curve 21 of Fig. 2 indicates that the maximum value of the high-temperature capacity characteristic/low-temperature output characteristic is close to approximately 0.283 and that the mixing ratio corresponding to the vicinity of this maximum value is in a range from approximately 0.3 to approximately 0.5. The cobalt-compound coating layer provided on the magnesium/nickel hydroxide solid solution particles lowers the resistance value of the nickel hydroxide particles. By mixing an appropriate proportion of zinc in the cathode plate having the nickel hydroxide particles, the resistance value at -30°C is decreased. It is considered that by the -30°C DC-IR of the cathode plate thus decreasing, the low-temperature output characteristic of the storage battery decreases and consequently the value of the high-temperature capacity characteristic/low-temperature output characteristic increases. When the amount of zinc exceeds an appropriate proportion, the resistance value at -30°C may increase and therefore, the zinc to be mixed in the cathode plate can be adjusted to an appropriate proportion by referencing the characteristic curve 21.

Also, the inventors of the present invention found an appropriate value of the high-temperature capacity characteristic/low-temperature output characteristic that is the index for evaluating the performance of the nickel-metal hydride battery of the first embodiment. That is, it was found that with the nickel-metal hydride battery of the first embodiment, the value of the index for obtaining a practical performance is no less than 0.2, the value of the index for obtaining a better performance is no less than 0.23, and the value of the index for obtaining an even higher performance is no less than 0.259.

For example, in Fig. 2, the mixing ratio for making the value of the high-temperature capacity characteristic/low-temperature output characteristic no less than 0.259 (broken line C2) is in the range of approximately 0.20 to approximately 0.70, and with a mixing ratio within this range, a high-performance cathode plate that can impart a high performance to the storage battery can be prepared. That is, it can be understood that in manufacturing this high-performance cathode plate, the mixing ratio of yttrium oxide and zinc oxide may be adjusted in a range from approximately 0.20 to approximately 0.70. If, for example, adjustment is to be performed to lessen the usage amount of yttrium oxide, the mixing ratio can be set to 0.70 to make the ratio of yttrium oxide and zinc oxide 3:7 in parts by weight. In this case, the mixing ratio of yttrium and zinc is approximately 0.85 according to Fig. 3 and the ratio of yttrium and zinc can thus be made 1:4 in parts by weight. On the other hand, if adjustment is to be performed to lessen the usage amount of zinc oxide, the mixing ratio can be set to 0.20 to make the ratio of yttrium oxide and zinc oxide 4:1. In this case, the mixing ratio of yttrium and zinc is approximately 0.35 according to Fig. 3 and the ratio of yttrium and zinc can thus be made 2:1 in parts by weight. In any case, the characteristics of the cathode plate can be set to characteristics required of a storage battery of high performance in regard to the above-described index.

Therefore, in the first embodiment, a cathode plate for nickel-metal hydride battery can be prepared with which the usage amount of yttrium and the like, used in the cathode of the nickel-metal hydride battery can be adjusted while maintaining the performance of the nickel-metal hydride battery.

Also, with another battery that differs in shape and the like, the high-temperature capacity characteristic/low-temperature output characteristic of this other battery is changed from that of the nickel-metal hydride battery of the first embodiment and the value of the index (lower limit value) for this other battery is changed to a value different from that of the nickel-metal hydride battery of the first embodiment. However, even with the other battery, the high-temperature capacity characteristic/low-temperature output characteristic and the mixing ratio of zinc and yttrium are in the same relationship as that illustrated in Figs. 2 and 3 illustrated in the first embodiment. Therefore, it can be said that even for the other battery differing in shape and the like, that is, even for another alkaline storage battery, the mixing ratio range in which the other alkaline storage battery can be used favorably is, as with the first embodiment, the range in which the mixing ratio of zinc and yttrium is 0.35 to 0.85, that is, the range in which the mixing ratio of zinc oxide and yttrium oxide is 0.2 to 0.7.

As described above, the following effects can be obtained by the nickel-metal hydride battery cathode of the first embodiment.

(1) Based on the high-temperature capacity characteristic and low-temperature output characteristic of the nickel-metal hydride battery, for example, the mixing ratio of yttrium with respect to zinc contained in the cathode plate is determined so that a favorable capacity characteristic and output characteristic can be obtained. The cathode plate is thereby prepared based on the mixing ratio for obtaining the characteristics required of the nickel-metal hydride battery and the usage amount of yttrium can be adjusted in accordance with the characteristics of the nickel-metal hydride battery. For example, by selecting, for the required characteristics, a mixing ratio with which the usage amount yttrium is minimized, the usage amount of yttrium can be suppressed or reduced. With such a nickel-metal hydride battery cathode, the usage amount of yttrium used in the cathode of the nickel-metal hydride battery can be adjusted to reduce cost while maintaining the battery performance of the storage battery.

(2) The nickel hydroxide particles include magnesium/nickel hydroxide solid solution particles and therefore, the cathode plate can be made to have favorable output characteristics.

Also, the nickel hydroxide particles are coated with cobalt oxyhydroxide having β-type crystal structure and therefore, the cathode plate of the first embodiment realizes satisfactory capacity characteristics (especially, the high-temperature capacity characteristics) in the nickel-metal hydride battery.

(3) The cathode plate is prepared based on a mixing ratio for arranging a cathode plate that accommodates a wide operating temperature range of the nickel-metal hydride battery, specifically, a range from 60°C to -30°C. The capacity of the nickel-metal hydride battery has a tendency to degrade due to side reactions during charging when the ambient temperature is high and therefore, the greater the discharge capacity at 60°C, the higher the battery performance of the alkaline storage battery. Also, the internal resistance of the nickel-metal hydride battery has a tendency to increase when the ambient temperature decreases, and therefore, the lower the internal resistance at -30°C, the higher the performance of the alkaline storage battery. The performance of the nickel-metal hydride battery can thus be evaluated to be higher when the (discharge capacity at 60°C)/(DC internal resistance at -30°C) is greater. That is, based on the ratio of the high-temperature capacity characteristic and the low-temperature output characteristic, a nickel-metal hydride battery cathode, with which a high battery performance can be maintained, can be prepared.

(4) By making the weight ratio of zinc with respect to the total weight of zinc and yttrium be no less than 0.35 and no more than 0.85, the high-temperature capacity characteristic/low-temperature output characteristic is made no less than a fixed value (the (60°C capacity)/(-30°C DC-IR) is made no less than 0.259 in the first embodiment), and the nickel-metal hydride battery can be made satisfactory in characteristics. This range is an especially optimal range when the surfaces of the nickel hydroxide particles with magnesium in solid solution are coated with cobalt oxyhydroxide having β-type crystal structure.

A second embodiment of the present invention will be described. The second embodiment differs from the first embodiment in the structure of the cathode active material.

The process for preparing the nickel hydroxide particles of the second embodiment is the same as that of the first embodiment. The process for preparing the cathode active material of the second embodiment is the same as that of the first embodiment. In the second embodiment, the specific surface area of the nickel hydroxide particles having the cobalt-compound coating layer coating was $20m^2/g$. The specific surface area of the nickel hydroxide particles before coating with the cobalt-compound coating layer was $14m^2/g$. The specific surface area of the cathode active material (nickel hydroxide particles) was thus increased by the coating of the cobalt-compound coating layer. The specific surface area increase amount, which is the difference between the "specific surface area of the nickel hydroxide particles coated with the cobalt-compound coating layer" and the "specific surface area of the nickel hydroxide particles before coating with the cobalt-compound coating layer" was $6m^2/g$ ($=20m^2/g-14m^2/g$).

The nickel hydroxide particle before coating with the cobalt-compound coating layer may be referred to at times as the "nickel hydroxide core." Each nickel hydroxide particle coated with the cobalt-compound coating layer thus includes the nickel hydroxide core and the cobalt-compound coating layer. The specific surface areas of the nickel hydroxide particles before and after coating with the cobalt-compound coating layer were respectively measured by a BET method by nitrogen gas adsorption.

The cobalt-compound coating layer of the second embodiment had the same structure as that of the first embodiment.

[Manufacture of Nickel Cathode]

Thereafter, a nickel cathode forming the cathode plate was prepared. Specifically, predetermined amounts of additives, such as metal cobalt and the like, water, and a thickening agent, such as carboxymethylcellulose (CMC) and the like were firstly added to the cathode active material powder obtained as described above and kneading was performed to prepare a paste with a water content of approximately 2.6±0.2%. The paste viscosity may be measured using a rotational viscometer, and by setting the measurement conditions of the rotational viscometer to, for example, a rotation speed of 50rpm and a sample amount of 0.5ml, measurements could be made with stability.

The paste was coated onto a foamed nickel substrate (porous substrate) to fill the pores and dried and pressure forming was performed to prepare a nickel cathode plate. The nickel cathode plate was then cut to a predetermined size and it was thereby possible to obtain the cathode plate of the second embodiment. The theoretical capacity of the nickel electrode (cathode plate) may be calculated in the same manner as in the first embodiment.

[Manufacture of Alkaline Storage Battery]

Besides using the cathode plate of the second embodiment, the alkaline storage battery (nickel-metal hydride battery) of the second embodiment was prepared by the same procedure as the first embodiment.

[Selection of the Specific Surface Area Increase Amount]

Respective relationships of durability internal pressure of the nickel-metal hydride battery prepared and paste viscosity with respect to the specific surface increase amount will be described in accordance with Fig. 4. In Fig. 4, the black diamond marks indicate measured values of the durability internal pressure. The durability internal pressures respectively corresponding to specific surface area increase amounts of "0.40," "0.40," "1.00," "1.60," "3.20," "5.65," "6.25," and "7.55" $m^2/g$ are illustrated in Fig. 4. The triangle marks in Fig. 4 indicate paste viscosities. The paste viscosities respectively corresponding to specific surface area increase amounts of "-0.20," "0.40," "0.40," "0.40," "1.00," "1.30," "1.60," "5.05," and "5.65" $m^2/g$ are illustrated in Fig. 4. A characteristic curve P indicating a relationship between the specific surface area increase amount and the durability internal pressure was obtained. A characteristic curve V indicating a relationship between the specific surface area increase amount and the paste viscosity was obtained. The durability internal pressure is the internal pressure of an alkaline storage battery that is measured at the point at which a predetermined charging/discharging test performed on the alkaline storage battery is completed. A lower durability internal pressure indicates that the amount of oxygen gas generated in the cathode is lower, that is, indicates that the environmental dependence is lower and the characteristics of the alkaline storage battery are better.

To determine the relationship between the durability internal pressure and the specific surface area increase amount, the inventors of the present application prepared, by the same method as that of the first embodiment, nickel hydroxide particles for evaluation that differ mutually in the specific surface area increase amount after coating with the cobalt-compound coating layer, for example, by changing the pH of the reaction liquid in the process of forming the cobalt-compound coating layer. Alkaline storage batteries for evaluation containing the nickel hydroxide particles for evaluation in the cathodes were prepared. The durability internal pressures of the respective alkaline storage batteries for evaluation were measured. Consequently, the inventors of the present application found that when the specific surface area increase amount is no less than $3m^2/g$, an alkaline storage battery cathode with which the durability internal pressure is reduced can be prepared. The specific surface area after coating with the cobalt-compound coating layer corresponding to the specific surface area increase amount of no less than $3m^2/g$ was 18 to $23m^2/g$.

That is, as illustrated in Fig. 4, when the specific surface area increase amount is in the range of 0 to 2 $m^2/g$, a comparatively high pressure P1 or P2 is exhibited as the durability internal pressure and the internal pressure increases greatly. When the specific surface area increase amount is no less than $3m^2/g$, the durability internal pressure is maintained in a vicinity of a comparatively low pressure P3. It is clear from the experience of the inventors that the trend of change of durability internal pressure when the specific surface area increase amount is greater than $8m^2/g$ is continuous with the trend of change of durability internal pressure when the specific surface area increase amount is in the range of 3 to $8m^2/g$.

The difference between the pressure P1 and the pressure P2 is 0.1 MPa, and the difference between the pressure P2 and the pressure P3 is 0.05MPa. That is, when the specific surface area increase amount is in the range of 3 to $12m^2/g$, the amount of change of the durability internal pressure is 0.05MPa at the most, and therefore, the rate of change of the durability internal pressure in this range is $0.0055MPa \cdot g/m^2$ ($\approx 0.05MPa/9m^2/g$). Even if the specific surface area increase amount range is set to 3 to $8m^2/g$ to be on the safe side, the amount of change of the durability internal pressure in this range is 0.05MPa at the most and therefore, the rate of change of the durability internal pressure in this range is $0.01MPa \cdot g/m^2$ ($\approx 0.05MPa/5m^2/g$).

It is generally believed that when the specific surface area increase amount is greater, better conductive networks are formed among the nickel hydroxide particles and between the nickel hydroxide particles and the foamed nickel substrate. However, as indicated by the characteristic curve V in Fig. 4, the paste viscosity increases in proportion to the specific surface area increase amount. This relationship is considered to be due to the nickel hydroxide particles coated with the cobalt-compound coating layer absorbing water more readily, that is, due to water entering dispersedly in the surfaces that have been increased in area by the coating and thereby decreasing the amount of water remaining on the surface and interposed among the nickel hydroxide particles. It is also clear from experiments by the inventors of the present application that when the paste viscosity becomes high, it becomes difficult to fill the pores of the foamed nickel substrate with the paste and therefore, a cathode with satisfactory performance cannot be prepared. That is, it was found that with the second embodiment, when the specific surface area increase amount exceeds $12m^2/g$, the paste viscosity becomes higher than a viscosity V1 at which it becomes difficult to fill the pores of the foamed nickel substrate with the paste and a satisfactory cathode cannot be prepared. It is thus preferable for the specific surface area increase amount to be no more than $12m^2/g$.

From the relationship between the durability internal pressure and the specific surface area increase amount, the present inventor found that the lower limit of the specific surface area increase amount is no less than $3m^2/g$, and from the relationship between the paste viscosity and the specific surface area increase amount, it was found that the upper limit of the specific surface area increase amount is no more than 12[$m^2/g$]. The specific surface area increase amount at which the durability internal pressure of the alkaline storage battery can be lowered and yet the filling of the foamed nickel substrate is easy is in a range from no less than $3m^2/g$ to no more than $12m^2/g$.

Although an increase of the specific surface area not by coating of the cobalt-compound coating layer but by an increase of the specific surface area of the nickel hydroxide particles per se may be considered, a preparation that increases the specific surface area of the nickel hydroxide particles per se may cause changes in the characteristics, such as output and the like, of the nickel hydroxide particles. The nickel hydroxide particles need to be coated with the cobalt-compound coating layer for improvement of conductivity and it is thus considered suitable to increase the specific surface area by the cobalt-compound coating layer that forms the outer surface. Based on the above, the inventors decided to increase the specific surface area by means of the cobalt-compound coating layer.

The predetermined charging/discharging test performed on the alkaline storage battery to measure the durability internal pressure will be described. In the charging/discharging test, a cycle of charging by a predetermined current and discharging by a predetermined current, performed so that the SOC (state of charge) of the nickel-metal hydride battery changes in a range from 20% to 80%, is repeated 1000 times under an environmental temperature of 35°C. At the point of completion of the 500th cycle, the charging/discharging cycle is paused once to adjust the internal pressure of the nickel-metal hydride battery to 0MPa. The predetermined current for charging was set to a current three times the rated capacity, that is, to 3C, and the predetermined current for discharging was set to a current three times the rated capacity, that is, to 3C. The maximum value of the internal pressure measured during this charging/discharging test was obtained as the durability internal pressure. This charging/discharging test is a test that is set based on a model of a charging/discharging pattern that occurs highly frequently with a nickel-metal hydride battery used in hybrid electric vehicle. Also, the internal pressure of the nickel-metal hydride battery was measured by a pressure sensor installed so as to seal a hole provided in a sealed housing container housing a power generating element.

[Selection of Cobalt Coating Amount/Average Particle Diameter]

Calculation of the utilization rate of the nickel-metal hydride battery prepared and a relationship of the average particle diameter and cobalt coating amount will be described.

To determine the relationship between the 25°C utilization rate and the cobalt coating amount/average diameter, the inventors of the present application prepared, by the same method as the above, nickel hydroxide particles for evaluation that mutually differ in cobalt coating amount. Alkaline storage batteries for evaluation with the nickel hydroxide particles for evaluation contained in the respective cathodes were prepared. The 25°C utilization rates of the respective alkaline storage batteries for evaluation were measured. The measurement results are shown in Fig. 5 and Table 1. The values of the measurement points indicated by the ○ marks in Fig. 5 are shown in Table 1. Consequently, the inventors of the present application found that when the cobalt coating amount/average particle diameter is in a predetermined range, the 25°C utilization rate is improved and specifically, an alkaline storage battery cathode having a 25°C utilization rate of no less than 95.7%, which is optimal for electric vehicles and hybrid electric vehicles, can be prepared.

[Table 1]

| | | | | | | | | | | | |
|---|---|---|---|---|---|---|---|---|---|---|---|
| Cobalt coating / avg.particle diameter | 0.28 | 0.37 | 0.46 | 0.48 | 0.49 | 0.49 | 0.52 | 0.53 | 0.54 | 1.12 | 1.40 |
| 25°C utilization rate | 94.2 | 96.0 | 96.7 | 98.0 | 98.5 | 98.3 | 98.1 | 97.6 | 98.1 | 98.7 | 94.6 |

As illustrated in Fig. 5, as the cobalt coating amount/average particle diameter increases, the 25°C utilization rate increases once and thereafter decreases. That is, when the cobalt coating amount/average particle diameter (may be referred to at times simply as "index") is close to 0.48%/μm, the 25°C utilization rate is approximately 98.0%, and when the index is close to 0.37%/μm, the 25°C utilization rate is approximately 96.0%. When the index is close to 0.28%/μm, the 25°C utilization rate is approximately 94.2%. When the index is close to 1.12%/μm, the 25°C utilization rate is approximately 98.7%. When the index is close to 1.40%/μm, the 25°C utilization rate is approximately 94.6%.

When the cobalt coating amount is held fixed, that the cobalt coating amount/average particle diameter has a large value indicates that the average particle diameter is small. It is thus considered that when the average particle diameter becomes too small, it becomes difficult to satisfactorily coat the cobalt-compound coating layer on the surfaces of the nickel hydroxide particles. Oppositely, that the cobalt coating amount/average particle diameter has a small value indicates that the average particle diameter is large. It is thus considered that when the average particle diameter becomes large, the specific surface area of the nickel hydroxide particles decreases.

It was thus found that the 25°C utilization rate is high in a range in which the cobalt coating amount/average particle diameter is no less than 0.37%/μm and no more than 1.12%/μm and is low in a range in which the cobalt coating amount/average particle diameter is less than 0.37%/μm and in a range in which the cobalt coating amount/average particle diameter is greater than 1.12%/μm. Also, it is more preferable for the cobalt coating amount/average particle diameter to be in a range of no less than 0.48%/μm and no more than 1.12%/μm because the 25°C utilization rate is extremely high in this range.

Although the 25°C utilization rate is predicted to change in accordance with the structure of the nickel-metal hydride battery, the relationship between the cobalt coating amount/average particle diameter and the 25°C utilization rate is the same regardless of the structure of the nickel-metal hydride battery. That is, the 25°C utilization rate is high when the cobalt coating amount/average particle diameter is in the range of no less than 0.37%/μm and no more than 1.12%/μm and the 25°C utilization rate is low outside this range. That is, even if a change occurs in a factor besides the cobalt coating amount/average particle diameter, the 25°C utilization rate is high when the cobalt coating amount/average particle diameter is in the range of no less than 0.37%/μm and no more than 1.12%/μm with a nickel-metal hydride battery.

The 25°C utilization rate of the second embodiment is calculated by the following formula (1).

$$\text{Utilization rate [\%]} = \text{Discharge capacity [Ah]}/\text{Charging capacity [Ah]} \times 100 \quad \ldots (1)$$

Here, the discharge capacity is the capacity Ah that is obtained by charging the nickel-metal hydride battery to an amount corresponding to a predetermined charging capacity under an environmental temperature of 25°C and thereafter discharging a discharge current of one-tenth of the charging capacity from the storage battery. This electrical capacity is expressed as a product of the measured discharging current and the measured time from the start of discharge until the discharge final voltage (1V) is attained.

From the above, by using nickel hydroxide particles with which the cobalt coating amount/average particle diameter is in the range of no less than 0.37%/μm and no more than 1.12%/μm, the battery characteristics of the nickel-metal hydride battery can be improved. More favorably, by using nickel hydroxide particles with which the cobalt coating amount/average particle diameter is in the range of no less than 0.48%/μm and no more than 1.12%/μm, the battery characteristics of the nickel-metal hydride battery can be improved further.

For the nickel-metal hydride battery, it is preferable for the durability internal pressure to be maintained low. It has become clear from the second embodiment that the durability internal pressure is maintained low when the specific surface area increase of the nickel hydroxide particles is in the range of 3 to 12$m^2$/g. Therefore, by performing control in the step of coating the nickel hydroxide particles with the cobalt-compound coating layer so that the specific surface area after coating is increased in the range of 3 to 12$m^2$/g with respect to the specific surface area before coating, the battery characteristics of the nickel-metal hydride battery using the nickel hydroxide particles in the cathode can be improved.

It is also preferable for the nickel-metal hydride battery that the 25°C utilization rate is maintained high. It has become clear from the second embodiment that the 25°C utilization rate is maintained high when the cobalt coating amount/average particle diameter is in the range of 0.37 to 1.12%/μm. It was found that the 25°C utilization rate is maintained higher when the cobalt coating amount/average particle diameter is in the range of 0.48 to 1.12%/μm. Therefore, by performing control in the step of coating the nickel hydroxide particles with the cobalt-compound coating layer so that the cobalt coating amount/average particle diameter is in the range of 0.37 to 1.12%/μm, the battery characteristics of the nickel-metal hydride battery using the nickel hydroxide particles in the cathode can be improved. Further, by performing control in the step of coating the nickel hydroxide particles with the cobalt-compound coating layer so that the cobalt coating amount/average particle diameter is in the range of 0.48 to 1.12%/μm, the battery characteristics of the nickel-metal hydride battery using the nickel hydroxide particles in the cathode can be maintained even higher.

As described above, the following effects can be obtained by the second embodiment.

(5) By making the amount of increase of the specific surface area of the nickel hydroxide particles coated with the cobalt-compound coating layer no less than 3$m^2$/g with respect to the specific surface area of the nickel hydroxide particles before coating with the cobalt-compound coating layer, the variation of the conductivity imparted to the nickel hydroxide particles by the cobalt-compound coating layer is lessened. Reactions that occur among the particles due to charging of the numerous nickel hydroxide particles are thereby made to occur more uniformly, and promotion of generation of oxygen gas due to a portion of the nickel hydroxide particles being overcharged at an early stage due to concentration of current to the portion of nickel hydroxide particles can thus be reduced. The charging characteristics of the cathode containing the alkaline storage battery cathode active material is thereby made satisfactory and, specifically, the generation of oxygen gas is suppressed to prevent an increase of internal pressure of the battery using the cathode containing the alkaline storage battery cathode active material.

Also by making the specific surface area increase amount no more than $12m^2/g$, a paste viscosity can be realized with which filling of the foamed nickel substrate is easy.

(6) The nickel hydroxide particles having the cobalt-compound coating layer are known to have improved conductivity and have improved charging characteristics. However, when the nickel hydroxide particles become small in average particle diameter, the specific surface area increases excessively so that the cobalt-compound coating layer cannot be coated favorably and the charging characteristics degrade. Oppositely, when the nickel hydroxide particles become large in average particle diameter, the specific surface area decreases and the output characteristics degrade. Therefore, in the second embodiment, the cobalt coating amount/average particle diameter is set in the range of 0.37 to 1.12%/μm, thereby enabling the amount of cobalt to be selected in accordance with the particle diameter of the nickel hydroxide particles and enable the charging characteristics of the nickel hydroxide particles to be maintained satisfactorily.

(7) Further, by setting the lower limit of the cobalt coating amount/average particle diameter to 0.48%/μm, the charging characteristics of the nickel hydroxide particles can be improved further.

The embodiments may be changed as follows.

Although in the first embodiment, the proportion of magnesium with respect to all metal elements contained in the nickel hydroxide particles is 3 mol%, the proportion of magnesium is not restricted thereto and may be no less than 2 mol% and no more than 10 mol%. The degree of freedom in regard to the preparation of the nickel hydroxide particles is thereby improved.

By making the proportion of magnesium no less than 2 mol%, satisfactory output characteristics can be realized appropriately. On the other hand, when the proportion of magnesium exceeds 10 mol%, self-discharge may become significant, and therefore, by making the proportion of magnesium no more than 10 mol%, self-discharge can be suppressed appropriately.

· Although in the respective embodiments, the average particle diameter of the nickel hydroxide powder is 10μm, the average particle diameter of the nickel hydroxide powder is not restricted thereto and may be no less than 5μm and no more than 20μm. The degree of freedom in regard to the preparation of the nickel hydroxide particles is thereby improved.

. Although in the respective embodiments, the average valence of cobalt is 2.9, the average valence of cobalt is not restricted thereto and may be no less than 2.6 and no more than 3.0. The degree of freedom in regard to the preparation of the nickel hydroxide particles is thereby improved.

When the average valence of cobalt is greater than 3.0, the charge balance in the cobalt oxyhydroxide crystal breaks down and transition from β-type crystal structure to a γ-type crystal structure occurs readily. Cobalt oxyhydroxide with the γ-type crystal structure is high in oxidizing power (is readily reduced in its self) and self-discharge therefore increases. The active material utilization rate may thereby decrease greatly. Therefore, by making the average valence of cobalt no more than 3.0, the crystal structure of cobalt oxyhydroxide can be maintained at the β type and an alkaline storage battery cathode with which there is no possibility of occurrence of the problem of increase of self-discharge can be obtained.

· In the first embodiment, the high-temperature capacity characteristic/low-temperature capacity characteristic was measured for a single nickel-metal hydride battery. However, the measurement of the high-temperature capacity characteristic/low-temperature capacity characteristic is not restricted thereto and may be performed on a plurality of nickel-metal hydride batteries that are electrically connected in series. The measurement of the high-temperature capacity characteristic/low-temperature capacity characteristic can thereby be performed appropriately on an arrangement of storage batteries.

· Although in the first embodiment, the battery case of the nickel-metal hydride battery is made of resin, the battery case of the nickel-metal hydride battery is not restricted thereto and as long as the power generating element can be housed favorably, the battery case of the nickel-metal hydride battery may be made of metal and the like, that is a material other than a resin. The degree of freedom of design of the nickel-metal hydride battery can thereby be increased.

· In the first embodiment, the mixing ratio is expressed as the amount of zinc oxide/(amount of zinc oxide + amount of yttrium oxide). However, the mixing ratio is not restricted thereto and, as long as the ratio of zinc oxide and yttrium oxide can be specified, may be expressed by the amount of zinc oxide/amount of yttrium oxide, or expressed by the amount of yttrium oxide/amount of zinc oxide, or expressed as the amount of yttrium oxide: amount of zinc oxide. The degree of freedom of preparation of the graph and the like, for determining the mixing ratio is thereby increased and convenience in design of the cathode plate and the like, is improved.

· Although in the respective embodiments, the nickel hydroxide particles contain magnesium in a solid solution state, the nickel hydroxide particles are not restricted thereto and may contain cadmium (Cd), cobalt (Co), or zinc (Zn) in a solid solution state in place of magnesium. The degree of freedom in regard to the preparation and characteristics of the nickel hydroxide particles is thereby improved.

· Although in the respective embodiments, zinc oxide was used as the additive, the additive is not restricted thereto and zinc compound, such as zinc chloride or zinc hydroxide and the like, may also be used. The degree of freedom in regard to the preparation and characteristics of the additive is thereby improved.

· Although in the first embodiment, yttrium oxide was used as the additive, the additive is not restricted thereto and an yttrium compound, such as yttrium nitrate and the like, may also be used. The degree of freedom in regard to the preparation and characteristics of the additive is thereby improved.

If a zinc compound other than zinc oxide or an yttrium compound other than yttrium oxide is to be used as the additive, the mixing ratio of zinc and yttrium is set in accordance with Fig. 3.

· In the first embodiment, yttrium oxide was mixed with zinc oxide. However, the embodiment is not restricted thereto and ytterbium oxide ($Yb_2O_3$) may be mixed with zinc oxide in place of yttrium oxide. This is because ytterbium oxide has functions equivalent to those of yttrium oxide.

Even with an arrangement where ytterbium oxide is mixed with zinc oxide, actions and effects that are the same as or similar to those of the first embodiment can be obtained. As in the case of yttrium oxide, an ytterbium compound other than ytterbium oxide may be used.

· Also, yttrium oxide and ytterbium oxide may be mixed with zinc oxide. Yttrium oxide mixed with zinc oxide and ytterbium oxide mixed with zinc oxide give rise to the same characteristics and therefore, actions and effects that are the same as or similar to those of the first embodiment can be obtained with an arrangement in which yttrium oxide and ytterbium oxide are mixed with zinc oxide.

· With the first embodiment, a case where the characteristic at 60°C is used as the high-temperature capacity characteristic and the characteristic at -30°C as the low-temperature output characteristic was described as an example. However, the characteristics are not restricted thereto, and as long as the temperature of the high-temperature capacity characteristic is a temperature higher than the temperature of the low-temperature output characteristic, the high-temperature capacity characteristic may be the characteristic at 70°C or 50°C and the like, and the low-temperature output characteristic may be the characteristic at -20°C or -40°C and the like. Evaluation of the storage battery by the high-temperature capacity characteristic/low-temperature output characteristic can thereby be performed appropriately in accordance with the operating environment.

· With the first embodiment, a case where the alkaline storage battery is the nickel-metal hydride battery was described as an example. However, the alkaline storage battery is not restricted thereto and, as long as it is a storage battery using an alkaline electrolyte, such as potassium hydroxide and the like, it may be a rechargeable battery (storage battery), such as a nickel-cadmium battery and the like. The range of applicability of the alkaline storage battery cathode can thereby be expanded.

· With the second embodiment, a case where the specific surface area of the nickel hydroxide particles coated with the cobalt-compound coating layer is $20m^2/g$ was described as an example. However, the specific surface area of the nickel hydroxide particles coated with the cobalt-compound coating layer is not restricted thereto and may be in a range of 18 to $23m^2/g$, which includes the $20m^2/g$. The degree of freedom of design of the alkaline storage battery cathode active material is thereby improved.

· Although with the second embodiment, a case where the specific surface area of the nickel hydroxide particles before coating with the cobalt-compound coating layer is $14m^2/g$ was described as an example, the specific surface area of the nickel hydroxide particles before coating with the cobalt-compound coating layer is not restricted thereto and may be in a range of 8 to $20m^2/g$, which includes the $14m^2/g$. The degree of freedom of design of the alkaline storage battery cathode active material is thereby improved.

· With the second embodiment, a case where the durability internal pressure is measured under an environmental temperature of 35°C was described as an example. However, the environmental temperature at which the durability internal pressure is measured is not restricted thereto and may be set to a temperature lower than 35°C or a temperature higher than 35°C. The evaluation of the nickel-metal hydride battery by the durability internal pressure can thereby be performed appropriately in accordance with the operating environment.

· With the second embodiment, a case where the utilization rate is measured under an environmental temperature of 25°C was described as an example. However, the environmental temperature at which the utilization rate is measured not restricted thereto and may be set to a temperature lower than 25°C or a temperature higher than 25°C. The evaluation of the nickel-metal hydride battery by the utilization rate can thereby be performed appropriately in accordance with the operating environment.

· Although with each of the embodiments, a case where the battery is a rechargeable battery was described as an example, the battery is not restricted thereto and may be a primary battery.

· The first and second embodiments may be combined and two or more modifications may be combined.

## Claims

**1.** An alkaline storage battery cathode comprising:

nickel hydroxide particles coated with a cobalt-compound coating layer;
a zinc compound; and
at least one of an yttrium compound and an ytterbium compound, wherein the zinc compound and the at least one of the yttrium compound and the ytterbium compound are mixed at a mixing ratio that is in accordance with a ratio of a capacity characteristics of the alkaline storage battery and an output characteristics of the alkaline storage battery.

**2.** The alkaline storage battery cathode according to claim 1, wherein the nickel hydroxide particles include magnesium/nickel hydroxide solid solution particles.

**3.** The alkaline storage battery cathode according to claim 1 or 2, wherein the cobalt-compound coating layer is made of cobalt oxyhydroxide having β-type crystal structure.

**4.** The alkaline storage battery cathode according to any one of claims 1 to 3, wherein:

the capacity characteristic of the alkaline storage battery is a discharge capacity of the alkaline storage battery at 60 degrees Celsius, and
the output characteristic of the alkaline storage battery is a DC internal resistance of the alkaline storage battery at -30 degrees Celsius.

**5.** The alkaline storage battery cathode according to any one of claims 1 to 4, wherein a ratio of the weight of zinc in the zinc compound to total of the weight of the zinc in the zinc compound and the weight of yttrium in the yttrium compound is no less than 0.35 and no more than 0.85.

**6.** The alkaline storage battery cathode according to any one of claims 1 to 5, comprising:

a porous substrate; and
a dry mixture filling pores of the porous substrate, wherein the dry mixture contains the nickel hydroxide particles, the zinc compound, and the at least one of the yttrium compound and the ytterbium compound.

**7.** A method of manufacturing an alkaline storage battery cathode, the method comprising:

coating nickel hydroxide particles with a cobalt-compound coating layer;
adding the nickel hydroxide particles, a zinc compound powder, and at least one of an yttrium compound and an ytterbium compound to the cathode, wherein the zinc compound and the at least one of the yttrium compound and the ytterbium compound are mixed at a mixing ratio that is in accordance with a ratio of a capacity characteristics of the alkaline storage battery and an output characteristics of the alkaline storage battery.

**8.** The method of manufacturing an alkaline storage battery cathode according to claim 7, wherein the nickel hydroxide particles include magnesium/nickel hydroxide solid solution particles.

**9.** The method of manufacturing an alkaline storage battery cathode according to claim 7 or 8, wherein:

the capacity characteristic of the alkaline storage battery is a discharge capacity of the alkaline storage battery at 60 degrees Celsius, and
the output characteristic of the alkaline storage battery is a DC internal resistance of the alkaline storage battery at -30 degrees Celsius.

**10.** The method of manufacturing an alkaline storage battery cathode according to any one of claims 7 to 9, wherein a ratio of the weight of zinc in the zinc compound to total of the weight of the zinc in the zinc compound and the weight of yttrium in the yttrium compound is no less than 0.35 and no more than 0.85.

**11.** An alkaline storage battery comprising:

a cathode including nickel hydroxide particles coated with a cobalt-compound coating layer, a zinc compound, and at least one of an yttrium compound and an ytterbium compound, wherein the zinc compound and the at least one of the yttrium compound and the ytterbium compound are mixed at a mixing ratio that is in accordance with a ratio of a capacity characteristics of the alkaline storage battery and an output characteristics of the alkaline storage battery.

**12.** A method of manufacturing an alkaline storage battery, the method comprising manufacturing a cathode, wherein the manufacturing the cathode includes
coating nickel hydroxide particles with a cobalt-compound coating layer, and
adding the nickel hydroxide particles, a zinc compound powder, and at least one of an yttrium compound and an ytterbium compound to the cathode, wherein the zinc compound and the at least one of the yttrium compound and the ytterbium compound are mixed at a mixing ratio that is in accordance with a ratio of a capacity characteristics of the alkaline storage battery and an output characteristics of the alkaline storage battery.

**13.** An alkaline storage battery cathode active material comprising:

nickel hydroxide particles coated with a cobalt-compound coating layer, wherein an increased amount of a specific surface area of the nickel hydroxide particles coated with the cobalt-compound coating layer with respect to a specific surface area of the nickel hydroxide particles before coated with the cobalt-compound coating layer is no less than $3m^2/g$.

**14.** The alkaline storage battery cathode active material according to claim 13, wherein the increased amount of the specific surface area is no more than $12m^2/g$.

**15.** The alkaline storage battery cathode active material according to claim 13 or 14, wherein B/A is no less than 0.37%/$\mu$m and no more than 1.12%/$\mu$m,
where A($\mu$m) represents the average particle diameter of the nickel hydroxide particles, and B(%) represents the proportion of the mass of cobalt contained in the cobalt-compound coating layer with respect to the mass of the nickel hydroxide particles.

**16.** The alkaline storage battery cathode active material according to claim 15, wherein the B/A is no less than 0.48%/$\mu$m.

**17.** The alkaline storage battery cathode active material according to any one of claims 13 to 16, wherein the nickel hydroxide particles include magnesium/nickel hydroxide solid solution particles.

**18.** The alkaline storage battery cathode active material according to any one of claims 13 to 17, wherein the cobalt-compound coating layer is made of cobalt oxyhydroxide having $\beta$-type crystal structure.

**19.** An alkaline storage battery cathode comprising the alkaline storage battery cathode active material according to any one of claims 13 to 18.

**20.** An alkaline storage battery comprising an alkaline storage battery cathode including the alkaline storage battery cathode active material according to any one of claims 13 to 18.

**21.** A method of manufacturing an alkaline storage battery cathode active material, the method comprising:

coating nickel hydroxide particles with a cobalt-compound coating layer,

wherein the coating increases a specific surface area of the nickel hydroxide particles coated with the cobalt-compound coating layer by no less than $3m^2/g$ with respect to a specific surface area of the nickel hydroxide particles before coated with the cobalt-compound coating layer.

**22.** The method of manufacturing an alkaline storage battery cathode active material according to claim 21, wherein the coating includes forming the cobalt-compound coating layer so that B/A is no less than 0.37%/$\mu$m and no more than 1.12%/$\mu$m, where A($\mu$m) represents the average particle diameter of the nickel hydroxide particles and B(%) represents proportion of the mass of cobalt contained in the cobalt-compound coating layer with respect to the mass of the nickel hydroxide particles.

**23.** An alkaline storage battery cathode comprising:

a porous substrate; and
a dry mixture filling pores of the porous substrate, wherein the dry mixture contains a cathode active material, a zinc compound, and at least one of the yttrium compound and the ytterbium compound,
wherein the zinc compound and the at least one of the yttrium compound and the ytterbium compound are mixed at a mixing ratio that is in accordance with a ratio of a capacity characteristics of the alkaline storage battery and an output characteristics of the alkaline storage battery, and
wherein the cathode active material is coated nickel hydroxide particles each made of a nickel hydroxide core and a cobalt-compound coating layer coating the nickel hydroxide core,
and wherein the coated nickel hydroxide particles have a specific surface area that is greater by no less than $3m^2/g$ with respect to a specific surface area of the nickel hydroxide core.

**24.** An alkaline storage battery comprising the alkaline storage battery cathode according to claim 23.

**Amended claims under Art. 19.1 PCT**

**1.** (Amended) An alkaline storage battery cathode comprising:

a cathode active material powder made of nickel hydroxide particles coated with a cobalt-compound coating layer; and
an additive powder mixed with the cathode active material powder at a certain proportion, wherein the additive powder includes

a zinc compound powder, and
at least one of an yttrium compound powder and an ytterbium compound powder mixed with the zinc compound powder,

wherein the zinc compound powder and the at least one of the yttrium compound powder and the ytterbium compound powder have a mixing ratio that is determined based on an index indicating a ratio of a capacity characteristic at an upper limit temperature of an operating temperature range of an alkaline storage battery using the alkaline storage battery cathode and an output characteristic of the alkaline storage battery at a lower limit temperature of the operating temperature range.

**2.** The alkaline storage battery cathode according to claim 1, wherein the nickel hydroxide particles include magnesium/nickel hydroxide solid solution particles.

**3.** The alkaline storage battery cathode according to claims 1 or 2, wherein the cobalt-compound coating layer is made of cobalt oxyhydroxide having $\beta$-type crystal structure.

**4.** (Amended) The alkaline storage battery cathode according to any one of claims 1 to 3, wherein:

the capacity characteristic at the upper limit temperature of the operating temperature range of the alkaline storage battery is a discharge capacity of the alkaline storage battery at 60 degrees Celsius, and
the output characteristic at the lower limit temperature of the operating temperature range of the alkaline storage battery is a DC internal resistance of the alkaline storage battery at -30 degrees Celsius.

**5.** (Amended) The alkaline storage battery cathode according to any one of claims 1 to 4, wherein a ratio of the weight of zinc in the zinc compound powder to total of the weight of the zinc in the zinc compound powder and the weight of yttrium in the yttrium compound powder is no less than 0.35 and no more than 0.85.

**6.** (Amended) The alkaline storage battery cathode according to any one of claims 1 to 5, comprising:

a porous substrate; and
a dry mixture filling pores of the porous substrate, wherein the dry mixture contains the nickel hydroxide particles, the zinc compound powder, and the at least one of the yttrium compound powder and the ytterbium compound powder.

**7.** (Amended) A method of manufacturing an alkaline storage battery cathode, the method comprising:

coating nickel hydroxide particles with a cobalt-compound coating layer;
mixing a cathode active material powder made of the nickel hydroxide particles with an additive power at certain proportion, the additive powder containing a zinc compound powder and at least one of an yttrium compound powder and an ytterbium compound powder and
determining a mixing ratio of the zinc compound powder and the at least one of the yttrium compound powder and the ytterbium compound powder based on an index vindicating a ratio of a capacity characteristic at an upper limit temperature of an operating temperature range of an alkaline storage battery using the alkaline storage battery cathode and an capacity characteristic of the alkaline storage battery at a lower limit temperature of the operating temperature range.

**8.** The method of manufacturing an alkaline storage battery cathode according to claim 7, wherein the nickel hydroxide particles include magnesium/nickel hydroxide solid solution particles.

**9.** (Amended) The method of manufacturing an alkaline storage battery cathode according to claim 7 or 8, wherein:

the capacity characteristic at the upper limit temperature of the operating temperature range of the alkaline storage battery is a discharge capacity of the alkaline storage battery at 60 degrees Celsius and
the capacity characteristic at the lower limit temperature of the operating temperature range of the alkaline storage battery is a DC internal resistance of the alkaline storage battery at -30 degrees Celsius.

**10.** (Amended) The method of manufacturing an alkaline storage battery cathode according to any one of claims 7 to 9, wherein a ratio of the weight of zinc in the zinc compound powder to total of the weight of the zinc in the zinc compound powder and the weight of yttrium in the yttrium compound powder is no less than 0.35 and no more than 0.85.

**11.** (Amended) An alkaline storage battery comprising:

a cathode including a cathode active material powder made of nickel hydroxide particles coated with a cobalt-compound coating layer, and an additive powder mixed with the cathode active material power at a certain proportion, the additive powder including a zinc compound powder and at least one of an yttrium compound powder and an ytterbium compound powder, mixed with the zinc compound powder; and
wherein the zinc compound powder and the at least one of the yttrium compound powder and the ytterbium compound powder have a mixing ratio determined based on an index indicating a ratio of a capacity capacity characteristic at an upper limit temperature of an operating temperature range of the alkaline storage battery using the cathode and an capacity characteristic of the alkaline storage battery at a lower limit temperature of the operating temperature range.

**12.** (Amended) A method of manufacturing an alkaline storage battery, the method comprising manufacturing a cathode, wherein the manufacturing the cathode includes
coating nickel hydroxide particles with a cobalt-compound coating layer and
mixing a cathode active material powder made of the nickel hydroxide particles with an additive powder at a certain proportion, the additive powder containing a zinc compound powder and at least one of an yttrium compound powder and an ytterbium compound powder,
wherein a mixing ratio of the zinc compound powder and the at least one of the yttrium compound powder and the ytterbium compound powder is determined based on an index indicating a ratio of a capacity characteristic at an upper limit temperature of an operating temperature range of the alkaline storage battery using the cathode and an output characteristic of the alkaline storage battery at a lower limit temperature of the operating temperature range.

**13.** (Amended) An alkaline storage battery cathode active material comprising:

nickel hydroxide particles coated with a cobalt-compound coating layer, wherein an increased amount of a specific surface area of the nickel hydroxide particles coated with the cobalt-compound coating layer with respect to a specific surface area of the nickel hydroxide particles before coated with the cobalt-compound coating layer is no less than $3m^2/g$ and the specific surface area after coated with the cobalt-compound coating layer is 18 to $23m^2/g$.

**14.** The alkaline storage battery cathode active material according to claim 13, wherein the increased amount of the specific surface area is no more than $12m^2/g$.

**15.** The alkaline storage battery cathode active material according to claim 13 or 14, wherein B/A is no less than 0.37%/$\mu$m and no more than 1.12%/$\mu$m,
where A($\mu$m) represents the average particle diameter of the nickel hydroxide particles, and B(%) represents the proportion of the mass of cobalt contained in the cobalt-compound coating layer with respect to the mass of the nickel hydroxide particles.

**16.** The alkaline storage battery cathode active material according to claim 15, wherein the B/A is no less than 0.48%/$\mu$m.

**17.** (Amended) The alkaline storage battery cathode active material according to any one of claims 13 to 16, wherein the Nickel hydroxide particles include magnesium/nickel hydroxide solid solution particles.

**18.** The alkaline storage battery cathode active material according to any one of claims 13 to 17, wherein the cobalt-compound coating layer is made of cobalt oxyhydroxide having $\beta$-type crystal structure.

**19.** An alkaline storage battery cathode comprising the alkaline storage battery cathode active material according to any one of claims 13 to 18.

**20.** An alkaline storage battery comprising an alkaline storage battery cathode including the alkaline storage battery cathode active material according to any one of claims 13 to 18.

**21.** (Amended) A method of manufacturing an alkaline storage battery cathode active material, the method comprising:

coating nickel hydroxide particles with a cobalt-compound coating layer,
wherein the coating increases a specific surface area of the nickel hydroxide particles coated with the cobalt-compound coating layer by no less than $3m^2/g$ with respect to a specific surface area of the nickel hydroxide particles before coated with the cobalt-compound coating layer, and the specific surface area after coated with the cobalt-compound coating layer is 18 to $23m^2/g$.

**22.** The method of manufacturing an alkaline storage battery cathode active material according to claim 21, wherein the coating includes forming the cobalt-compound coating layer so that B/A is no less than 0.37%/$\mu$m and no more than 1.12%/$\mu$m, where A($\mu$m) represents the average particle diameter of the nickel hydroxide particles and B(%) represents proportion of the mass of cobalt contained in the cobalt-compound coating layer with respect to the mass of the nickel hydroxide particles.

**23.** (Amended) An alkaline storage battery cathode comprising:

a porous substrate; and
a dry mixture filling pores of the porous substrate, wherein the dry mixture contains a cathode active material powder and an additive powder mixed at a certain proportion with the cathode active material powder, with the additive powder including a zinc compound powder and at least one of the yttrium compound powder and the ytterbium compound powder,
wherein the zinc compound powder and the at least one of the yttrium compound powder and the ytterbium compound powder have a mixing ratio determined based on an index indicating a ratio of a capacity characteristic at an upper limit temperature of an operating temperature range of an alkaline storage battery using the alkaline storage battery cathode and an output characteristic of the alkaline storage battery at a lower limit temperature of the operating temperature range, and
wherein the cathode active material power is coated nickel hydroxide particles each made of a nickel hydroxide core and a cobalt-compound coating layer coating the nickel hydroxide core,
and wherein the coated nickel hydroxide particles have a specific surface area that is greater by no less than $3m^2/g$ with respect to a specific surface area of the nickel hydroxide core.

**24.** An alkaline storage battery comprising the alkaline storage battery cathode according to claim 23.

**25.** (Added) The method of manufacturing an alkaline storage battery cathode according to claim 7, wherein the determining the mixing ratio proportion of the zinc compound powder and the at least one of the yttrium compound powder and the ytterbium compound powder is based on
a characteristic curve, in which the index is plotted according to the ratio of the zinc compound powder and the at least one of the yttrium compound powder and the ytterbium compound powder, and
a specified value of the index corresponding to a characteristic required of the alkaline storage battery using the alkaline storage battery cathode.

**26.** (Added) The method of manufacturing an alkaline storage battery cathode according to claim 7, wherein the determining the mixing ratio proportion of the zinc compound powder and the at least one of the yttrium compound powder and the ytterbium compound powder is based on
a specified value determined in accordance with a characteristic required of the alkaline storage battery using the alkaline storage battery cathode, and
the ratio of the capacity characteristic at the upper limit temperature of the operating temperature range of the alkaline storage battery and the output characteristic of the alkaline storage battery at the lower limit temperature of the operating temperature range.

**27.** (Added) The method of manufacturing an alkaline storage battery cathode according to claim 7, wherein the determining the mixing ratio of the zinc compound powder and the at least one of the yttrium compound powder and the ytterbium compound powder is based on
the ratio of the capacity characteristic at the upper limit temperature of the operating temperature range of the alkaline storage battery and the output characteristic of the alkaline storage battery at the lower limit temperature of the operating temperature range, and
a specified value corresponding to a characteristic required of the alkaline storage battery using the alkaline storage battery cathode.

# Fig.1

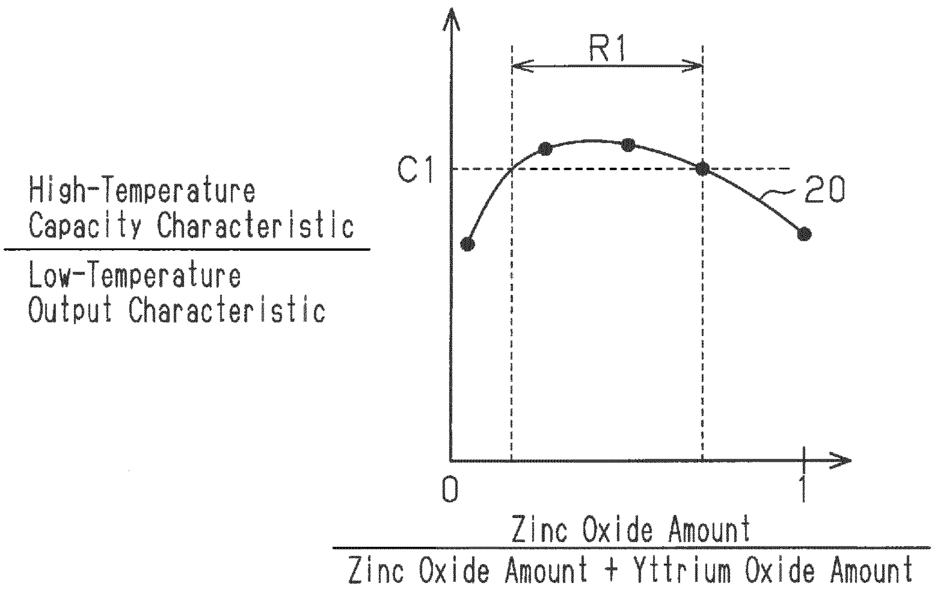
R1
C1
20
High-Temperature Capacity Characteristic / Low-Temperature Output Characteristic
0
1
Zinc Oxide Amount / Zinc Oxide Amount + Yttrium Oxide Amount

# Fig.2

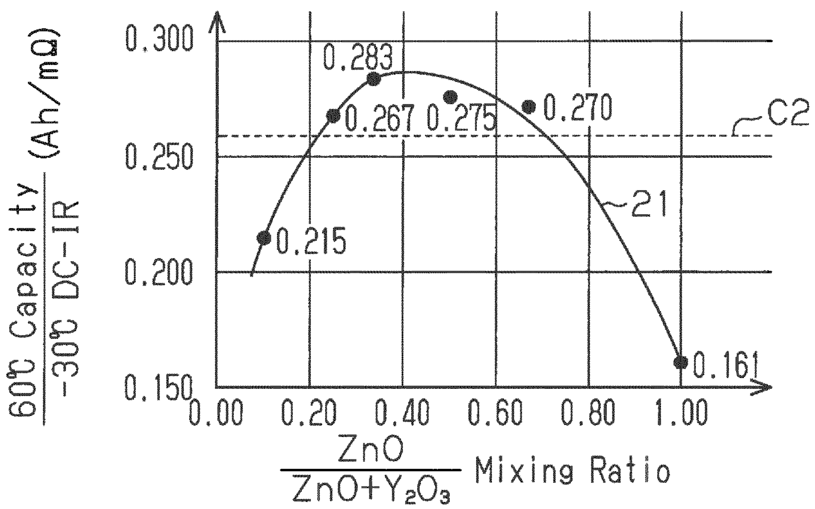
60℃ Capacity / -30℃ DC-IR (Ah/mΩ)
0.300
0.250
0.200
0.150
0.283
0.267
0.275
0.270
0.215
0.161
C2
21
0.00
0.20
0.40
0.60
0.80
1.00
ZnO / ZnO+Y2O3 Mixing Ratio

# Fig.3

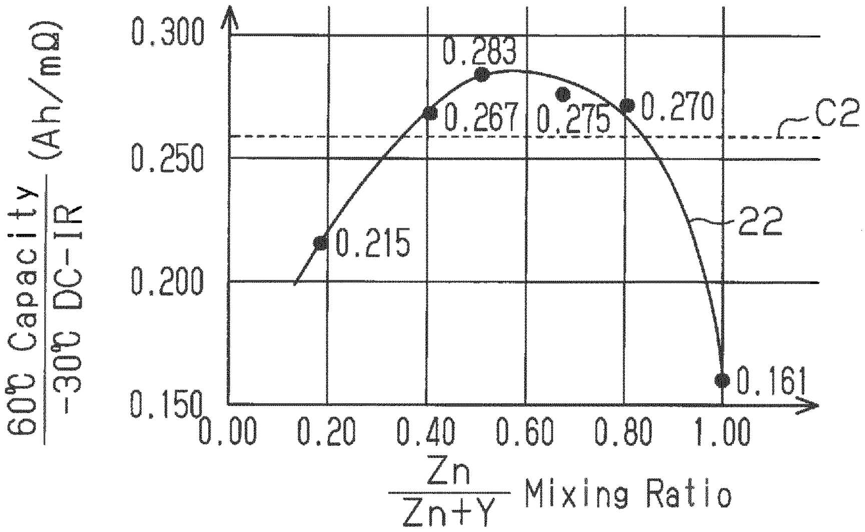
60℃ Capacity / -30℃ DC-IR (Ah/mΩ)
0.300
0.250
0.200
0.150
0.00
0.20
0.40
0.60
0.80
1.00
Zn / Zn+Y Mixing Ratio
0.283
0.267
0.275
0.270
0.215
0.161
C2
22

**Fig.4**

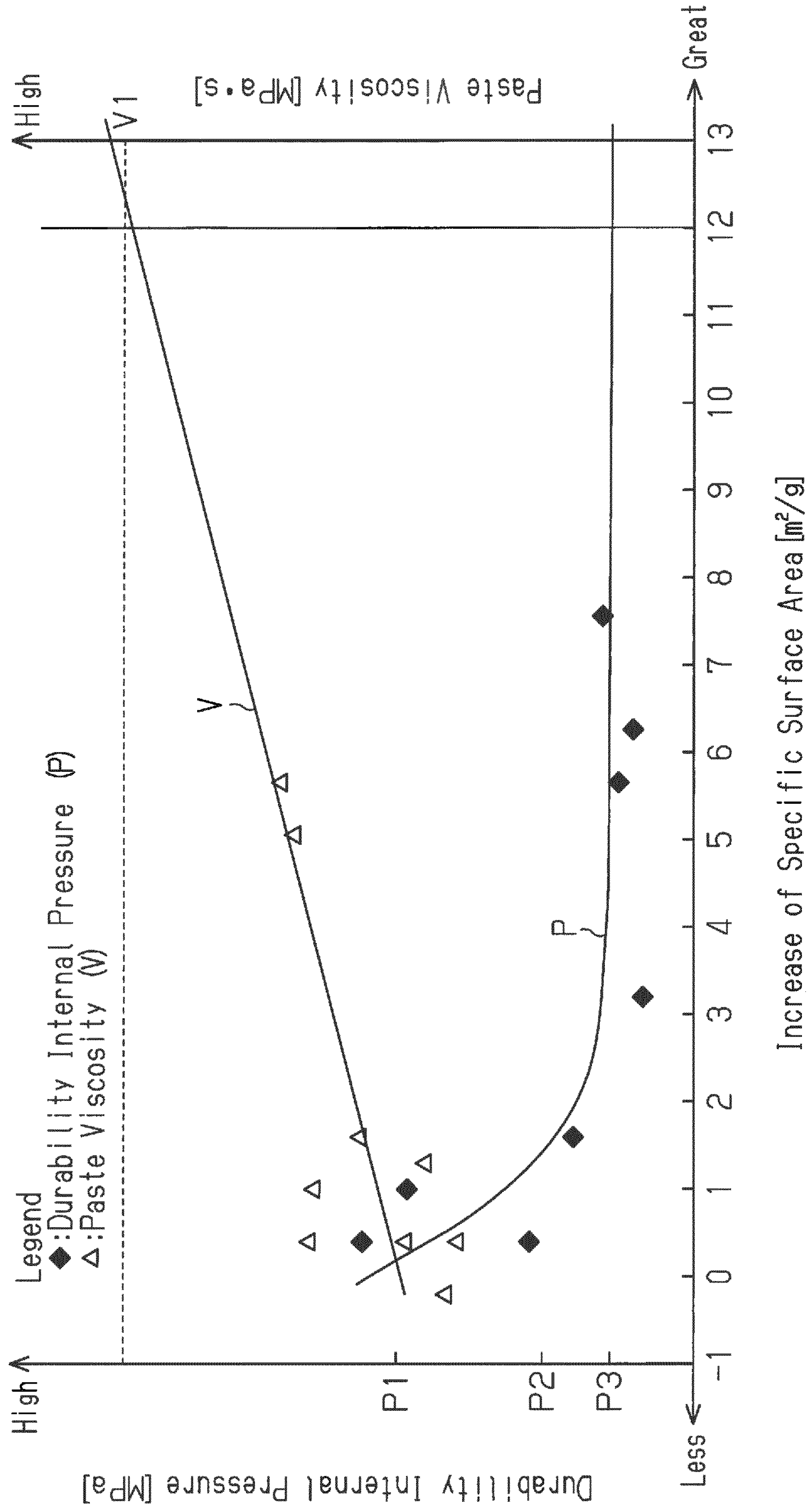

Legend
◆:Durability Internal Pressure (P)
△:Paste Viscosity (V)
Durability Internal Pressure [MPa]
Paste Viscosity [MPa·s]
High
High
Less
Great
P1
P2
P3
V1
V
P
-1
0
1
2
3
4
5
6
7
8
9
10
11
12
13
Increase of Specific Surface Area [m²/g]

# Fig.5

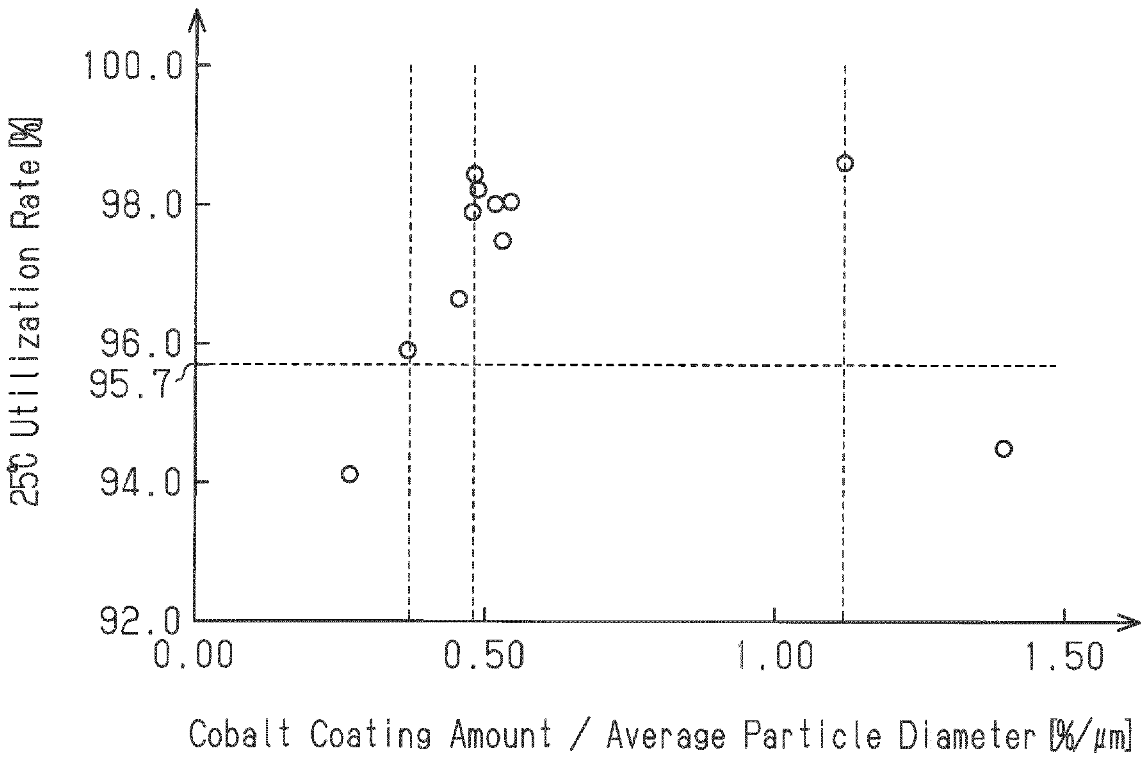
100.0
98.0
96.0
95.7
94.0
92.0
25℃ Utilization Rate [%]
0.00
0.50
1.00
1.50
Cobalt Coating Amount / Average Particle Diameter [%/μm]

**INTERNATIONAL SEARCH REPORT**

International application No.
PCT/JP2012/059931

A. CLASSIFICATION OF SUBJECT MATTER
*H01M4/32*(2006.01)i, *H01M4/52*(2010.01)i, *H01M4/62*(2006.01)i, *H01M10/30*(2006.01)i

According to International Patent Classification (IPC) or to both national classification and IPC

B. FIELDS SEARCHED

Minimum documentation searched (classification system followed by classification symbols)
H01M4/32, H01M4/52, H01M4/62, H01M10/30

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2001-185138 A (Sanyo Electric Co., Ltd.), 06 July 2001 (06.07.2001), claims 1, 5; paragraphs [0011], [0013] (Family: none) | 1-12,18,23, 24 |
| Y | JP 2003-317796 A (Sanyo Electric Co., Ltd.), 07 November 2003 (07.11.2003), paragraphs [0012], [0013] (Family: none) | 1-12,18,23, 24 |
| Y | JP 2005-129497 A (Sanyo Electric Co., Ltd.), 19 May 2005 (19.05.2005), example 1 (Family: none) | 1-12,18,23, 24 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 25 June, 2012 (25.06.12) | 03 July, 2012 (03.07.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

INTERNATIONAL SEARCH REPORT

International application No. PCT/JP2012/059931

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2002-279992 A (Yuasa Corp.), 27 September 2002 (27.09.2002), claim 1; paragraphs [0019], [0021]; examples (Family: none) | 1-12,18,23, 24 |
| Y | JP 10-64535 A (Yuasa Corp.), 06 March 1998 (06.03.1998), claim 1; paragraph [0020] (Family: none) | 1-12,18,23, 24 |
| Y | JP 2003-132940 A (Sanyo Electric Co., Ltd.), 09 May 2003 (09.05.2003), paragraph [0009] & US 2003/0096166 A1 & CN 1414649 A | 2,8,17 |
| Y | JP 10-106552 A (Matsushita Electric Industrial Co., Ltd.), 24 April 1998 (24.04.1998), entire text (Family: none) | 6 |
| X<br>Y | JP 2004-71304 A (Matsushita Electric Industrial Co., Ltd.), 04 March 2004 (04.03.2004), paragraph [0034] (Family: none) | 13,14,21<br>15-20,22-24 |
| Y | JP 2005-310580 A (Matsushita Electric Industrial Co., Ltd.), 04 November 2005 (04.11.2005), claims 2, 4 & US 2005/0238960 A1 & CN 1691377 A | 15-20,22 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003317796 A
- JP 2006048954 A